# EUROPÄISCHE PATENTSCHRIFT

(11) **EP 1 046 972 B1**
(45) Veröffentlichungstag und Bekanntmachung des Hinweises auf die Patenterteilung: **06.03.2013**
(21) Anmeldenummer: 99810340.2
(22) Anmeldetag: 22.04.1999
(51) Int. Cl.: G05B 19/042

(54) **Softwaremässige Repräsentation von Geräten**
Software based representation of devices
Representation d' appareils à l'aide d'un logiciel

(43) Veröffentlichungstag der Anmeldung: 25.10.2000
(73) Patentinhaber: ABB Research Ltd., 8050 Zürich (CH)
(72) Erfinder: Beeler, Erich, 5405 Dättwil (CH); Auf Der Maur, Dominik, 5408 ENNETBADEN (CH); Fabri, Andreas, Dr.,, 8002 ZÜRICH (CH); Itschner, Robert, 8055 ZÜRICH (CH); Pommerell, Claude, Dr., 8005 ZÜRICH (CH); Rutishauser, Martin, Dr., 8005 ZÜRICH (CH)
(74) Vertreter: ABB Patent Attorneys

(56) Entgegenhaltungen:
- EP-A- 0 434 986
- WO-A-97/29409
- US-A- 5 706 455
- ROBERT ITSCHNER ET AL: "GLASS: Remote Monitoring of Embedded Systems in Power Engineering" IEEE INTERNET COMPUTING, EMBEDDED SYSTEMS, [Online] Juni 1998 (1998-06), Seiten 46-52, XP002114070 Retrieved from the Internet: <URL:http://computer.org/internet/> [retrieved on 1999-09-02]

## Beschreibung

### Technisches Gebiet

Die Erfindung bezieht sich auf das Gebiet der Leittechnik. Sie bezieht sich auf ein Verfahren, zur softwaremässigen Repräsentation von Geräten gemäss dem Oberbegriff des Patentanspruchs 1.

### Stand der Technik

Eine softwaremässige Repräsentation von Geräten ist in der Anlagenleittechnik allgemein bekannt. Programmierbausteine zur Ansteuerung bestimmter Gerätetypen werden in einer funktionalen Programmiersprache erstellt. Ein Programmierbaustein repräsentiert ein Gerät in dem Sinne, dass Steuerbefehle an das Gerät über den Programmierbaustein ausgelöst werden, und dass Rückmeldungen des Gerätes durch den Programmierbaustein verarbeitet werden. Zur Erstellung der Steuerung einer gegebenen Anlage werden die Programmierbausteine, die realen Geräten der Anlage entsprechen, mit geeigneten funktionalen Programmierwerkzeugen textuell oder graphisch miteinander verknüpft um ein gewünschtes Verhalten der Geräte und der Anlage zu erreichen. Die Zuordnung eines Programmierbausteins zu einem bestimmten Gerät geschieht, indem der Programmierbaustein mittels bestimmter Hardwareadressen oder Kommunikationsadressen und Kommunikationsparametern des Geräts parametriert wird.

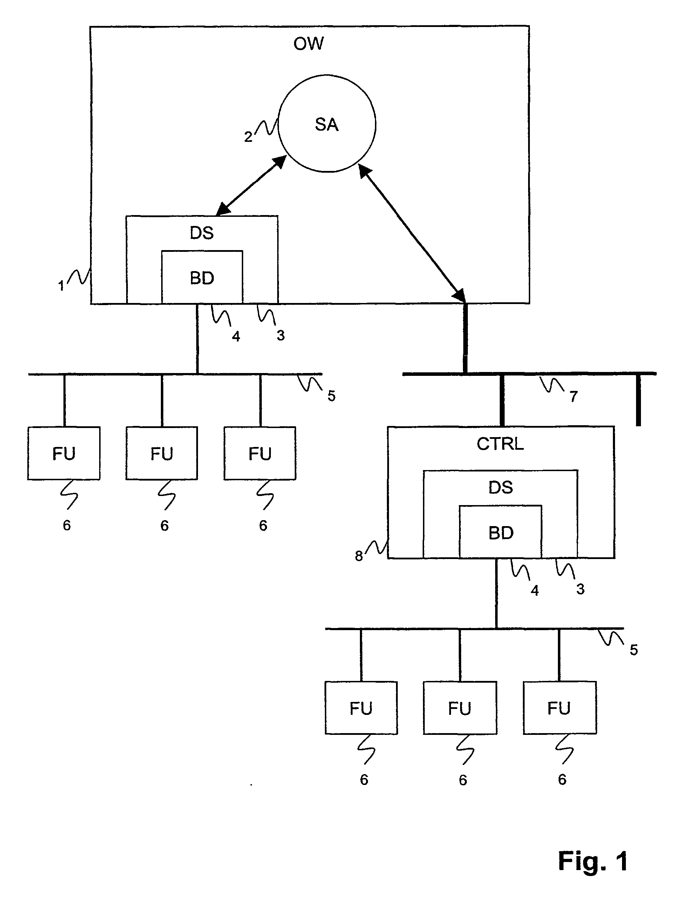

Eine entsprechende Leitsystemstruktur ist in der Figur 1 gezeigt. Das Leitsystem ist ein Computersystem und besteht aus Hardware oder Geräten, die Rechner enthalten, sowie aus auf diesen Rechnern gespeicherterter und ausgeführter Software. Auf einem Leitrechner oder einer Bedienstation 1 wird eine Software-Applikation 2 ausgeführt, welche eine Anlagensteuerung implementiert. Die Software-Applikation 2 kommuniziert mit Feldgeräten 6 entweder direkt über einen Datenserver 3, dessen Bustreiber 4 und einen Feldbus 5, oder aber indirekt über ein Netzwerk 7, einen Controller 8 mit Datenserver 3, dessen Bustreiber 4 und einen Feldbus 5. Controller und Feldgeräte sind je mit eigener, verteilter Software programmiert.

Je nachdem, wie die Kommunikation zu den Feldgeräten und deren Datenserver konfiguriert ist, ist eine Anpassung der Software-Applikation notwendig. Damit wird die Programmierung der Software-Applikation in unerwünschter Weise von der Struktur sowie von den Eigenschaften und Parametern der Leittechnikhardware, sowie von den Eigenschaften und Parametern der gesteuerten Geräte abhängig.

Im Artikel "Glass: Remote Monitoring of Embedded Systems in Power Engineering", Robert Itschner, Claude Pommerell, Martin Rutishauser, IEEE Internet Computing, May/June 1998, wird ein objektorientierter Programmieransatz erwähnt, der realen Geräten jeweils sogenannte Proxy-Objekte zuordnet. Ein Proxy-Objekt kapselt die Kommunikation zum realen Gerät und stellt aktuelle Prozesswerte des realen Gerätes zur Verfügung. Auch Dabei ist jedoch weiterhin die Software-Applikation stark von der Leittechnikhardware abhängig.

### Darstellung der Erfindung

Es ist deshalb Aufgabe der Erfindung, ein Verfahren, ein zur softwaremässigen Repräsentation von Geräten der eingangs genannten Art zu schaffen, welche die Abhängigkeit einer Software-Applikation zur Steuerung eines Leitsystems von der Struktur und den Komponenten der Hardware des Leitsystems sowie von durch das Leitsystem angesteuerten Geräten minimieren.

Diese Aufgabe lösen ein Verfahren, zur softwaremässigen Repräsentation von Geräten mit den Merkmalen des Patentanspruchs 1.

In der erfindungsgemässen softwaremässigen Repräsentation von Geräten, die Teil eines Leitsystems sind oder durch das Leitsystem angesteuert werden, ist einem oder mehreren Geräten jeweils ein Objekt in einem objektorientierten Computerprogramm zuordnungsbar, wobei ein Objekt bei einer Konfiguration des Leitsystems anhand einer logischen Geräteidentifikation eine Kommunikationsverbindung zu einem Gerät aufbaut. Ein solches Objekt wird im folgenden Proxy-Objekt genannt.

Die Erfindung ermittelt ein Proxy-Objekt bei einer Konfiguration den genauen Typ und weitere Parameter des zugeordneten Gerätes automatisch, und konfiguriert beispielsweise anhand dieser Informationen das zugeordnete Gerät. Dies hat den Vorteil, dass Typ und Parameter des Gerätes zum Zeitpunkt einer Applikations-Programmierung des Leitsystems nicht bekannt sein müssen und nicht in einem dabei erstellten Programm enthalten sind. Dadurch wird die Wiederverwendbarkeit und Wartbarkeit des Programms erhöht.

In einer weiteren bevorzugten Variante der Erfindung diagnostiziert ein Proxy-Objekt den Zustand des zugeordneten Gerätes und stellt die ermittelte Diagnoseinformation einem übergeordeten Diagnosesystem zur Verfügung.

In einer weiteren bevorzugten Variante der Erfindung stellt ein Proxy-Objekt eine graphische Schnittstelle zu seinem zugeordneten Gerät zur Verfügung, um beispielsweise Zustände und Parameter des Gerätes zu visualisieren und/oder zu verändern. Diese graphische Komponente wird von anderen Systemobjekten abgeholt und in Ihre Visualisierung eingebaut. Auf diese Weise wird diese Schnittstelle auf einem Anzeigegerät eines entfernten Rechners oder des lokalen Rechners, auf dem das Proxy-Objekt ausgeführt wird, dargestellt. In analoger Weise stellt das Proxy-Objekt auch Diagnose- und Kommunikationsverfahren zur Verfügung.

Ein wesentlicher Vorteil der Erfindung ist, dass aufgrund der logischen Identifikation eines Gerätes durch ein zugeordnetes Proxy-Objekt bei der Konfiguration des Leitsystems keine physikalischen Adressen und Kommunikationsverbindungen als Teil einer Software-Applikation programmiert werden müssen. Dadurch kann die Software-Applikation unabhängig von der detaillierten Struktur und von Parametern des Leitsystems erstellt und gewartet werden.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: Leitsystemstruktur gemäss dem Stand der Technik; und
- Figur 2: eine erfindungsgemässe Leitsystemstruktur.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

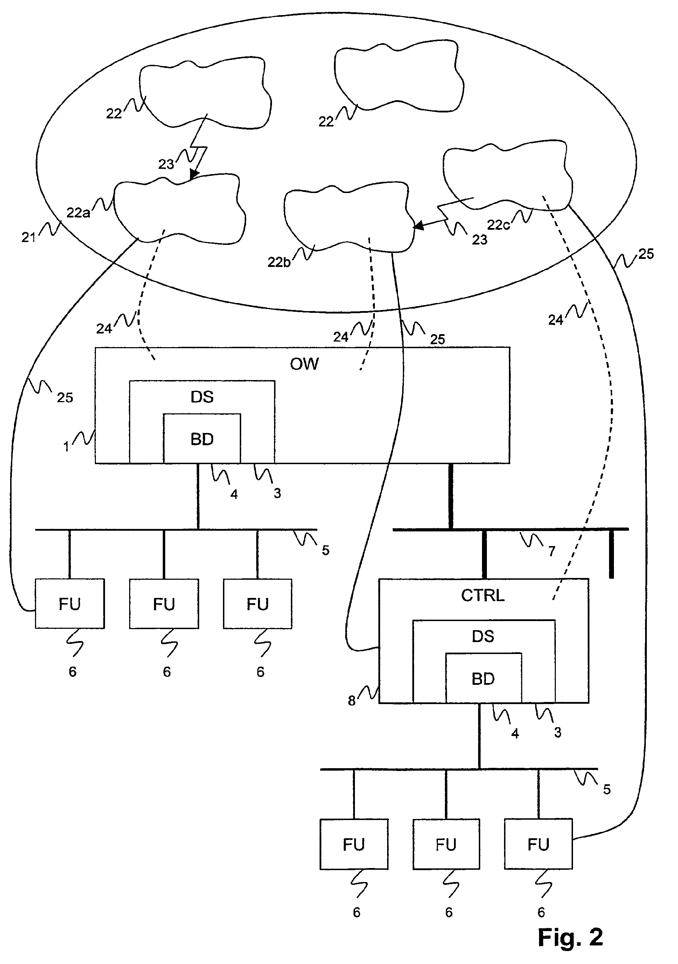

Die Figur 2 zeigt eine erfindungsgemässe Leitsystemstruktur. Ein Leitsystem ist ein Computersystem und besteht aus Hardware oder Geräten, die Rechner enthalten, sowie aus auf diesen Rechnern gespeicherter und ausgeführter Software. Die dargestellte Leitsystemstruktur ist somit eine Kombination einer Gerätestruktur und einer Softwarestruktur.

Das Leitsystem dient der Steuerung und Regelung eines technischen Prozesses, beispielsweise eines verfahrenstechnischen Produktionsprozesses, einer Anlage zur Energieerzeugung, einer Anlage zur Heizung und Belüftung eines Gebäudes oder eines elektromechanischen Prozesses.

Die Gerätestruktur des Leitsystems ist wie folgt aufgebaut: Ein Leitrechner oder eine Bedienstation 1 kommuniziert mit Feldgeräten 6 entweder direkt über einen Datenserver 3, dessen Bustreiber 4 und einen Feldbus 5, oder aber indirekt über ein Netzwerk 7, einen Controller 8 mit Datenserver 3, dessen Bustreiber 4 und einen Feldbus 5.

Die Softwarestruktur weist eine Objektwelt 21 mit Software-Objekten 22, 22a-c auf, die miteinander über Botschaften 23 kommunizieren. Ein Software-Objekt 22, 22a-c wird physikalisch auf einem bestimmten Rechner ausgeführt, was für einige der Software-Objekte durch physikalische Relationen 24 dargestellt ist. Einige Software-Objekte 22a-c sind jeweils einem Gerät 6,8 zugeordnet. Sie werden Proxy-Objekte genannt. Ihre Zuordnung zu Geräten ist durch logische Relationen 25 dargestellt.

Ein Proxy-Objekt 22a-c ist eine Repräsentation eines Gerätes 6,8 innerhalb der Objektwelt 21 in dem Sinne, dass Informationen und Fähigkeiten eines Gerätes 6,8 anderen Objekten 22, 22a-c der Objektwelt 21 durch ein dem Gerät 6,8 zugeordnetes Proxy-Objekt 22a-c verfügbar gemacht werden.

Ein einem Proxy-Objekt 22a-c zugeordnetes Gerät 6,8, ist beispielsweise ein Feldgerät 6, ein Leittechnikrechner wie der Controller 8, oder eine Stell- oder Messeinrichtung mit oder ohne lokaler Datenverarbeitung, Eine Stelleinrichtung ist beispielsweise ein Antrieb mit End- und Schutzschaltern, mit oder ohne einen lokalen Rechner zur Antriebsregelung und zum lokalen Schutz des Antriebs vor beispielsweise Überlast oder Überhitzung.

Die Softwarestruktur des Leitsystems wird durch ein Computerprogramm beschrieben. Dieses Computerprogramm beschreibt die Software-Objekte 22, 22a-c, die auf einem oder mehreren Rechnern des Leitsystems ausgeführt werden. Das Computerprogramm wird in einer objektorientierten Programmierumgebung erstellt und in einer objektorientierten Ausführungsumgebung ausgeführt.

Durch Verwendung einer geeigneten Ausführungsumgebung oder eines Objektmanagementsystems wie beispielsweise CORBA (Common Object Request Broker Architecture), DCOM (Distributed Component Object Model) oder Java ist es in der Objektwelt 21 nicht erforderlich zu wissen, wo ein bestimmtes Software-Objekt 22, 22a-c physikalisch ausgeführt wird. Dadurch wird die Programmierung der objektorientierten Leittechniksoftware von der Leittechnikstruktur entkoppelt. Somit muss beispielsweise das Software-Objekt 22c nicht wissen, auf welchem Rechner sich das Software-Objekt 22b, dem es eine Botschaft 23 schickt, befindet.

In dem Falle, wo sich die Objektwelt 21 wie beschrieben über mehrere ausführende Rechner erstreckt, tritt die Gesamtmenge der Objekte 22, 22a-c, respektive das diese Objekte 22, 22a-c beschreibende Computerprogramm, nicht nur an die Stelle der im Stand der Technik beschriebenen Software-Applikation 2 sondern zusätzlich auch an die Stelle der sich im Stand der Technik auf diesen mehreren Rechnern befindlichen verteilten Software.

Bei der Definition einer Instanz eines Proxy-Objektes 22a-c wird das zugeordnete Gerät 6,8 durch eine eindeutige logische Geräteidentifikation identifiziert, beispielsweise durch eine Nummer oder einen Namen. Im Gegensatz zu einer Verwendung einer physikalischen Adresse muss dabei nicht eine genaue physikalische Verbindung über beispielsweise Kommunikationsnetzwerke und Geräteanschlüsse bekannt sein.

Bei einer Konfiguration des Leitsystems, das heisst bei einer Anpassung der Software an eine bestimmte Leittechnikstruktur, ermittelt jedes Proxy-Objekt 22a-c anhand der logischen Geräteidentifikation, welches konkrete physikalische Gerät 6,8 ihm zugeordnet ist, und wie es mit ihm kommuniziert. Dies geschieht beispielsweise, wie in CORBA, mittels eines sogenannten Name-Servers, der zu einem Namen eine Referenz auf ein Objekt oder ein Gerät liefert, oder mittels eines sogenannten Trading-Mechanismus zum Finden von Objekten und Geräten in einer verteilten Umgebung. Ein solcher Trading-Mechanismus ist beispielsweise in der Norm ISO/IEC 13235 beschrieben.

Das Proxy-Objekt 22a-c erstellt eine Kommunikationsverbindung zum zugeordneten Gerät 6,8, bestimmt durch Anfrage an das Gerät 6,8 den genauen Typ des Gerätes 6,8 und allfällige Parameter und konfiguriert das Gerät 6,8. Beispielsweise wird bei einem Sensor als Parameter ein Messbereich des Sensors bestimmt und als Konfiguration ein Verstärkungsfaktor im Sensor eingestellt.

Das Proxy-Objekt 22a-c verwaltet die Kommunkationsschnittstelle mit dem zugeordneten Gerät 6,8, so dass alle Anfragen anderer Objekte an Informationen des Gerätes 6,8 und Stellbefehle an das Gerät über das Proxy-Objekt 22a-c ablaufen und gegebenenfalls koordiniert und konsistent gehalten werden. Dies hat den Vorteil, dass verhindert wird, dass eine hardwaremässige Kommunikationsschnittstelle zu einem Gerät 6,8 durch eine Vielzahl unkoordinierter Anfragen von verschiedenen Objekten 22 überlastet wird.

In einer vorteilhaften Variante der Erfindung speichert das Proxy-Objekt 22a-c aktuelle Prozesswerte des zugeordneten Gerätes 6,8 und stellt diese Werte anderen Objekten 22, 22a-c zur Verfügung. Dadurch wird die Kommunikationsschnittstelle zum Gerät weiter entlastet.

In einer weiteren vorteilhaften Variante der Erfindung stellt das Proxy-Objekt 22a-c Diagnosemethoden für das zugeordnete Gerät 6,8 zur Verfügung. Dies hat den Vorteil, dass die Diagnoseverfahren eines Gerätes 6,8 als Teil dieses Gerätes 6,8 bei jeder Anwendung des Gerätes 6,8 bereits zur Verfügung stehen. Vorteilhafterweise kooperiert ein solches Diagnoseverfahren mit einem übergeordneten Diagnoseverfahren oder mit Diagnoseverfahren von in ein einer Hierarchie des Leitsystems übergeordneten Objekten, so dass die Diagnose eines Leitsystems modular aufgebaut werden kann.

Vorteilhafterweise kann ein Proxy-Objekt 22a-c persistent gemacht werden, das heisst, es kann zusammen mit seinem Zustand abgespeichert werden. Dies ist beispielsweise zum Abspeichern eines Zustands im Hinblick auf eine spätere Diagnose, als Backup einer bestimmten Konfiguration oder zur Wiederverwendung einer bestimmten Konfiguration nützlich. Persistenz wird beispielsweise realisiert, indem ein Objekt in ein Array von Bytes umgewandelt wird oder in einer geeigneten Datenbasis abgelegt wird.

In einer vorteilhaften Variante der Erfindung erzeugt ein Proxy-Objekt 22a-c eine graphische Benutzerschnittstelle zum zugeordneten Gerät 6,8 auf einem Anzeigegerät eines entfernten Rechners oder des lokalen Rechners des Proxy-Objekts 22a-c, das heisst, des Rechners, auf dem das Proxy-Objekt 22a-c ausgeführt wird. Dies geschieht beispielsweise indem das Proxy-Objekt 22a-c Programmcode, beispielsweise Java-Code, an einen Rechner übermittelt. Dieser Programmcode wird durch den Rechner ausgeführt und erzeugt auf einem Anzeigegerät eine graphische Schnittstelle zum Gerät 6,8. Diese Schnittstelle zeigt beispielsweise Parameter oder Zustände des Gerätes 6,8 an und erlaubt beispielsweise, diese Parameter oder Zustände zu ändern. Dazu kommuniziert der erwähnte Programmcode, vorteilhafterweise über das Proxy-Objekt 22a-c, mit dem Gerät 6,8. Dieses Verfahren der graphischen Visualisierung hat den wesentlichen Vorteil, dass bei Änderungen in einer Leittechnikhardware nicht die dazugehörige Visualisierungssoftware einer Bedienerschnittstelle neu programmiert werden muss, sondern dass die Visualisierungsverfahren als zu einem Gerät 6,8 gehörend mitgeliefert werden.

In analoger Weise stellt das Proxy-Objekt 22a-c anderen Objekten Verfahren zur Kommunikation mit dem Gerät 6,8, zur Diagnose des Geräts 6,8 oder zum Speichern des Proxy-Objekts 22a-c zur Verfügung.

In einer anderen vorteilhaften Variante der Erfindung wird das Proxy-Objekt 22a-c auf seinem zugeordneten Gerät 6,8 ausfgeführt und stellt anderen Objekten 22 Verfahren zur Visualisierung, zur Kommunikation mit dem Gerät 6,8, zur Diagnose des Geräts 6,8 oder zum Speichern des Proxy-Objekts 22a-c zur Verfügung.

In einer weiteren vorteilhaften Variante der Erfindung wird das Proxy-Objekt 22a-c nicht im Leitsystem ausfgeführt, sondern in einem Rechner, der mit einem Kommunikationsnetz des Leitsystems verbunden ist. Das Proxy-Objekt 22a-c dieser Variante stellt Diagnoseverfahren für sein zugeordnetes Gerät zur Verfügung, ohne dass dadurch der Rechenbedarf im Leitsystem erhöhr wird.

Als Beispiel der Beschreibung eines Proxy-Objekts dient der folgende Java-Code in UML(Unified Modeling Language)-Notation:

| **TransformerProxy** |
|---|
| current : float |
| voltage : float |
| tapPosition : integer |
| temperature : float |
| +getCurrent() : float |
| +getVoltage() : float |
| +getTapPosition() : integer |
| +getTemperature () : float |
| |
| +configure(ParameterFile : String) |
| +installYourSelf(realObject : String) |
| +addEventListener(I : Listener) |
| +diagnose() : String |
| +visualize(C : java.awt.Component, ps : ParameterSet) |
| +store(file : String) |
| +$restore(file : String) |

Die Beschreibung besteht aus drei Abschnitten. Ein erster Abschnitt enthält einen Objektnamen, der in diesem Fall "TransformerProxy" ist. Ein zweiter Abschnitt definiert Variablen des Objektes. In diesem Fall entsprechen die Variablen messbaren Grössen eines Transformators, dem das Objekt als Proxy-Objekt zuordnungsbar ist. Ein dritter Abschnitt definiert Methoden, die das Proxy-Objekt zur Verfügung stellt. Diese Methoden werden nun beschrieben. Ein einer Methode vorangestelltes Pluszeichen ("+") bedeutet, dass diese Methode "public" oder öffentlich ist, das heisst, dass sie von einem anderen Objekt aufgerufen werden kann. Ein einer Methode vorangestelltes Dollarzeichen ("$") bedeutet, dass diese Methode statisch ist, das heisst dass sie eine Methode einer Objektklasse ist.

Die Methoden getCurrent, getVoltage , getTapPosition, getTemperature können von anderen Objekten aufgerufen werden. Sie geben einem Aufrufer aktuelle Werte eines Stromes, einer Spannung, einer Abgriffposition und einer Temperatur zurück. Dazu entnimmt das Proxy-Objekt die Werte dieser Grössen einem lokalen Speicher des Proxy-Objekts. Diese gespeicherten Grössen werden nur bei Bedarf und unter Kontrolle des Proxy-Objekts anhand von Messungen am realen Transformer aufdatiert. Dazu kommuniziert das Proxy-Objekt mit dem realen Transformator, respektive mit einem den realen Transformator steuernden Feldgerät. Dadurch dass die Vermittlung von Werten des realen Transformators in der beschriebenen Weise über das Proxy-Objekt geschieht, wird verhindert dass das Feldgerät des Transformators und die zu diesem führenden Kommunikationskanäle durch unkoordinierte Anfragen verschiedener Objekte überlastet werden.

Die Methode configure erhält als Parameter beispielsweise den Namen einer Datei mit Konfigurationsdaten, mit denen das Proxy-Objekt konfiguriert wird.

Die Methode installYourSelf dient zur Zuordnung des Proxy-Objekts zu einem realen Transformator. Sie erhält als Parameter die logische Geräteidentifikation des Transformators. Anhand dieser Identifikation wird, wie bereits beschrieben, mittels eines Name-Servers oder eines Trading-Mechanismus die physikalische Verbindung zum Leitgerät des Transformators ermittelt und eine Kommunikationsverbindung zu diesem aufgebaut.

Um einem Gerät, in diesem Falle einem Transformator erfindungsgemäss ein Proxy-Objekt zuzuordnen, werden die folgenden Schritte ausgeführt: Als erster Schritt wird ein Objekt im Sinne der objektorientierten Methodologie als Instanz einer Objektklasse erzeugt oder instanziiert. Das Objekt weist noch keine individuellen Daten oder Eigenschaften auf, die es von anderen Objekten der gleichen Klasse unterscheiden. Als zweiter Schritt wird das Objekt durch Aufruf der Methode configure wie oben beschrieben mit spezifischen Konfigurationsdaten konfiguriert. Dadurch wird beispielsweise seine individuelle Rolle in der Softwarestruktur oder Objektstruktur des Leitsystems definiert. Als dritter Schritt wird durch Aufruf der Methode installYourSelf wie oben beschrieben die Verbindung zum zugeordneten Gerät hergestellt.

Die Methode addEventListener erlaubt einem anderen Objekt, das sich durch einen Übergabeparameter Listener identifiziert, sich beim Proxy-Objekt als Empfänger von Ereignissen, die das Proxy-Objekt generiert, eintragen lässt. Dies hat zur Folge, dass beim Auftreten bestimmter betriebs- oder schutzrelevanter Ereignisse, beispielsweise beim Auftreten eines Kurzschlusses oder einer Überspannung, die eingetragenen Objekte durch das Proxy-Objekt informiert werden.

Die Methode diagnose ist hier in einer minimalen Ausführungsform beschrieben. Sie gibt eine Zeichenfolge, welche ein Resultat einer Diagnose des realen Transformators durch das Leitgerät des Transformators oder durch das Proxy-Objekt darstellt, zurück.

Die Methode visualize erhält in einem ersten Parameter den Namen eines Objektes, welches einen Ausgabschnittstelle, beispielsweise einen Bildschirm oder ein Fenster eines Bildschirms, verwaltet. In einem zweiten Parameter erhält die Methode einen Satz von Parametern der Ausgabeschnittstelle, beispielsweise die Grösse des Bildschirms oder Fensters.

Die Methode store erhält als Parameter den Namen einer Datei, in der sich das Proxy-Objekt beispielsweise als eine serielle Folge von Zeichen oder Bytes, die das Objekt und seinen Zustand repräsentiert, abspeichert.

Die Methode restore erhält als Parameter den Namen einer Datei in der sich das Proxy-Objekt mit der Methode store abgespeichert hat. Die Methode restore bewirkt, dass das Objekt, mit dem gespeicherten Zustand, aktiviert.

Zusammengefasst bietet das erfindungsgemässe Verfahren eine flexible und effiziente Methode zur Programmierung und Konfiguration eines Leitsystems.

### Bezugszeichenliste

- 1: Leitrechner oder Bedienstation
- 2: Software-Applikation
- 3: Datenserver
- 4: Bustreiber
- 5: Feldbus
- 6: Feldgerät
- 7: Netzwerk
- 8: Controller
- 21: Objektwelt
- 22, 22a-c: Software-Objekt
- 23: Botschaft
- 24: Physikalische Relation
- 25: Logische Relation

## Patentansprüche

1. Verfahren zur softwaremässigen Repräsentation eines Gerätes (6,8) in einem Leitsystem, wobei ein objektorientiertes Computerprogramm auf dem Leitsystem konfiguriert wird und dem Gerät (6,8) ein Objekt (22a-c) des objektorientierten Computerprogramms zugeordnet wird, **dadurch gekennzeichnet, dass** bei einer Konfiguration das Objekt (22a-c) den genauen Typ und weitere Parameter des zugeordneten Gerätes (6,8) automatisch ermittelt, und dass
das zugeordnete Gerät (6,8) durch eine eindeutige logische Geräteidentifikation identifiziert wird und das Objekt (22a-c) anhand der logischen Geräteidentifikation eine Kommunikationsverbindung zum Gerät (6,8) findet.

2. Verfahren gemäss Anspruch 1, **dadurch gekennzeichnet, dass** das Gerät durch das Leitsystem angesteuert wird oder ein Teil des Leitsystems ist.

3. Verfahren gemäss Anspruch 1 oder 2, **dadurch gekennzeichnet, dass** das Objekt (22a-c) Parameter des Geräts (6,8) bestimmt und das Gerät (6,8) konfiguriert.

4. Verfahren gemäss Anspruch 1 oder 2, **dadurch gekennzeichnet, dass** das Objekt (22a-c) Diagnosemethoden für das Gerät (6,8) zur Verfügung stellt und diese Diagnosemethoden mit Diagnosemethoden von anderen Objekten, beispielsweise von übergeordneten Geräten zusammenarbeiten.

5. Verfahren gemäss Anspruch 1 oder 2, **dadurch gekennzeichnet, dass** das Objekt (22a-c) eine graphische Schnittstelle zum Gerät (6,8) auf dem lokalen Rechner des Objekts (22a-c) oder auf einem entfernten Rechner erzeugt.

6. Verfahren gemäss Anspruch 1 oder 2, **dadurch gekennzeichnet, dass** das Objekt (22a-c) Verfahren zur Kommunikation mit dem Gerät (6,8) oder zur Diagnose des Gerätes (6,8) oder zur Speicherung des Objektes (22a-c) zur Verfügung stellt.

## Claims

1. Method for the software-based representation of an appliance (6, 8) in a control system, wherein an object-oriented computer program on the control system is configured and the appliance (6, 8) is allocated an object (22a - c) from the object-oriented computer program, **characterized in that**
during a configuration the object (22a - c) automatically ascertains the precise type and further parameters of the associated appliance (6, 8), and **in that**
the associated appliance (6, 8) is identified by an explicit logical appliance identification, and the object (22a - c) uses the logical appliance identification to find a communication link to the appliance (6, 8).

2. Method according to Claim 1, **characterized in that** the appliance is actuated by the control system or is part of the control system.

3. Method according to Claim 1 or 2, **characterized in that** the object (22a - c) determines parameters of the appliance (6, 8) and configures the appliance (6, 8).

4. Method according to claim 1 or 2, **characterized in that** the object (22a - c) provides diagnosis methods for the appliance (6, 8), and these diagnosis methods cooperate with diagnosis methods from other objects, for example from superordinate appliances.

5. Method according to Claim 1 or 2, **characterized in that** the object (22a - c) produces a graphical interface for the appliance (6, 8) on the local computer of the object (22a - c) or on a remote computer.

6. Method according to Claim 1 or 2, **characterized in that** the object (22a - c) provides methods for communicating with the appliance (6, 8) or for diagnosing the appliance (6, 8) or for storing the object (22a - c).

## Revendications

1. Procédé de représentation par logiciel d'un dispositif (6, 8) dans un système de commande, dans lequel un programme informatique orienté objet est configuré sur le système de commande et un objet (22a-c) du programme informatique orienté objet est associé au dispositif (6, 8), **caractérisé en ce que** dans une configuration, l'objet (22a-c) détermine automatiquement le type exact et d'autres paramètres du dispositif associé (6, 8), et **en ce que**
le dispositif associé (6, 8) est identifié par une identification logique de dispositif unique et l'objet (22a-c) trouve une liaison de communication vers le dispositif (6, 8) sur la base de l'identification logique de dispositif.

2. Procédé selon la revendication 1, **caractérisé en ce que** le dispositif est commandé par le système de commande ou par une partie du système de commande.

3. Procédé selon la revendication 1 ou 2, **caractérisé en ce que** l'objet (22a-c) détermine des paramètres du dispositif (6, 8) et configure le dispositif (6, 8).

4. Procédé selon la revendication 1 ou 2, **caractérisé en ce que** l'objet (22a-c) met à disposition du dispositif (6, 8) des méthodes de diagnostic et ces méthodes de diagnostic coopèrent avec des méthodes de diagnostic d'autres objets, par exemple de dispositifs de niveau supérieur.

5. Procédé selon la revendication 1 ou 2, **caractérisé en ce que** l'objet (22a-c) génère une interface graphique avec le dispositif (6, 8) sur l'ordinateur local de l'objet (22a-c) ou sur un ordinateur distant.

6. Procédé selon la revendication 1 ou 2, **caractérisé en ce que** l'objet (22a-c) met à disposition des procédés de communication avec le dispositif (6, 8) ou de diagnostic du dispositif (6,8) ou de stockage de l'objet (22a-c).
